# EUROPEAN PATENT SPECIFICATION

(11) **EP 3 126 142 B1**
(45) Date of publication and mention of the grant of the patent: **01.01.2020**
(21) Application number: 15714195.3
(22) Date of filing: 31.03.2015
(51) Int. Cl.: B32B 27/08, B65D 75/00, B65B 11/00, B32B 27/32

(54) **MULTILAYER FILM**
MEHRSCHICHTIGE FOLIE
FILM MULTICOUCHE

(30) Priority: 01.04.2014 EP 14163041
(43) Date of publication of application: 08.02.2017
(73) Proprietor: Saudi Basic Industries Corporation, Riyadh 11422 (SA); SABIC Global Technologies B.V., 4612 PX Bergen op Zoom (NL)
(72) Inventor: BACCARO, Lucio, NL-6160 GA Geleen (NL); WILLEMS, Maria, Johanna, NL-6160 GA Geleen (NL)
(74) Representative: Sabic Intellectual Property Group
(86) International application number: PCT/EP2015/057005
(87) International publication number: WO 2015/150373

(56) References cited:
- WO-A1-2013/122484
- US-A- 5 902 684
- US-A1- 2009 104 424
- US-A1- 2010 129 632
- Marcel B Van Enckevort: "The effect of Extrusion and Casting settings on Stretch Film Properties", , 1 January 2004 (2004-01-01), XP055136750, Retrieved from the Internet: URL:http://plastics.sabic.eu/publications/ _media/effect_of_extrusion_and_casting_set tings_on_stretch_film_properties.pdf [retrieved on 2014-08-27]

## Description

The invention relates to a stretchable multilayer film, to a process for preparing said film, to a process for stretch wrapping said film around an object, to the use of said film, and to an object that is stretch wrapped by said film.

Such films are suitable for stretch wrapping (i.e. non-heat shrinkable). Stretch wrapping films are particularly used for wrapping unitized objects such as packaging various types of goods, from retail foods, such as (bottled) beverages and cigarettes to carpets and furniture, for wrapping loaded shipping pallets and large articles, such as furniture, carpets, books etc.
Stretch films are stretched around the object and then adhered to itself; the tendency of the adhered film to resist further stretching provides a load containment force.
For shrink films, the film is wrapped around the object and then shrunk, typically by heating, to provide a load containment force.

The invention relates to stretch films. Environmental considerations are important for packaging materials. Energy consumption along the value chain should be minimal and also down-gauging, i.e. using less material (e.g. though thinner films) is therefore very important.

In addition, the films should have good properties to make it suitable to be used for packaging. Good properties include but are not limited to good tear (cross) resistance, good optical properties, good holding force, suitable elongation and other good mechanical properties, such as impact resistance, puncture resistance, tensile strength etc.

WO98/56580 A1 discloses a stretchable multilayer film in which at least one outer layer (A) comprises a linear low density polyethylene (LLDPE), at least one intermediate layer (B) comprises a polyolefin composition containing LLDPE and a propylene polymer having an insolubility in xylene higher than 70%, and at least another layer (C) comprises a very low density polyethylene (VLDPE).

EP0785065A2 discloses a stretch wrapping film (i.e. non-heat shrinkable) having (i) skin layers and (ii) at least one core layer which includes at least 5% by weight, more preferably from about 10% to about 80% by weight (of the layer composition) of a propylene polymer, preferably a propylene homopolymer; for the film as a whole the propylene content ranges from about 5% to about 65% by weight (of the film). In more preferred embodiments, the films include skin layers, intermediate layers and a core layer. At least one of the intermediate and core layers contains the propylene polymer, which is preferably a homopolymer or a blend of homopolymer with linear low density polyethylene (LLDPE); the skin layers comprise an ethylene polymer, preferably having a tacky LLDPE composition.

However, WO98/56580A1 and EP0785065A2 teach that in order to obtain good properties, it is necessary to use a blend of propylene polymer with linear low density polyethylene for the inner layer(s).

Further multilayer films are disclosed in US2010/129632A1, US2009/104424A1, US5902684A, and WO2013/122484A1.

In practice, however, for preparing films, it is preferred to not use blends as blends cause a less stable extrusion and will cause inhomogeneities and increase the risk of gels, inclusions and other defects in the prepared films, thereby also causing inhomogeneities in the mechanical properties. Consequently, using blends for preparing films may also cause quality problems and may even cause rejection of produced lots.

Furthermore, blending makes the production process more complicated.

Therefore, it is the object of the invention to provide a multi-layer film, which multi-layer film is suitable to be used as a stretch film and which multi-layer film does not comprise blends, while maintaining the properties desired for stretch wrapping, in particular for stretch wrapping of beverages, such as (sparkling) beverages in (plastic) bottles, where a high holding force is needed.

This object is achieved by a stretchable multilayer film comprising in the following order
a. a first outer layer comprising at least 98 wt% of a linear low density polyethylene
b. a first inner layer
c. a second inner layer
d. a third inner layer
e. a second outer layer comprising 70% to 30wt% of a linear low density polyethylene and 30 to 70wt% very low density polyethylene (VLDPE),
wherein linear low density polyethylene has a density from 915 to 934 kg/m³ as determined according to ISO 1872-2, and the VLDPE has a density of from 900 to 915 kg/m³ as determined according to ISO 1872-2;
wherein the first inner layer and/or the third inner layer
- comprise(s) at least 98wt% of a propylene homopolymer or 98 wt% of a propylene ethylene copolymer, wherein the other inner layer(s) comprise(s) at least 98wt% of a linear low density polyethylene; or
- consist(s) essentially of a propylene homopolymer or consist(s) essentially of a propylene ethylene copolymer, wherein the other inner layer(s) consist(s) essentially of a linear low density polyethylene;
wherein the first inner layer is in direct contact with the first outer layer, and the third inner layer is in direct contact with the second outer layer.

With the term consists essentially of is meant that the layer comprises a propylene homopolymer or comprises a propylene ethylene copolymer or comprises a linear low density polyethylene, but wherein the propylene homopolymer or propylene ethylene copolymer or linear low density polyethylene is not mixed or blended with another polyolefin.

Where it is mentioned that a layer comprises a certain wt% of VLDPE, propylene homopolymer, propylene ethylene copolymer or LLDPE this is the wt% based on the single layer comprising said component (and not based on the total multi-layer film).

It has been found that the multilayer film of the invention has a high holding force, while surprisingly it is not needed to use a blend of polymers in any inner layer of the multilayer film.

With holding force as defined herein is meant the containment force given by the multilayer film to the unitized goods it is wrapped around. The holding force is measured as described in the experimental section at 25°C and 50% humidity. Additionally, the multilayer film of the invention may show good optical properties (haze and gloss). Also mechanical properties, such as elongation, tear resistance, in particular in tear resistance in transversal direction, also known as tear cross resistance, puncture resistance and/or impact resistance may be improved.

Optical properties as used herein are measured as described in the experimental section.

Elongation is measured using the HIGHLIGHT method as described in the experimental section.

Tear resistance is measured as described in the experimental section. Tear cross resistance (also referred to herein as tear resistance in TD) is the tear resistance as measured in the direction perpendicular to the direction of the film extrusion.

Puncture resistance as used herein is measured using ASTM F1306-90.

Impact resistance is measured as described in the experimental section.

In the context of the invention with 'multi-layer' film is meant that the film comprises at least five layers, for example six, seven, eight, nine, ten or eleven layer But even up to thirty three layers may be possible. Preferably, for ease of production, the amount of layers in the multi-layer film is uneven, for example wherein the amount of layers in the multi-layer film is five, seven, nine or eleven.

The first outer layer comprises at least 98wt% of a linear low density polyethylene based on the first outer layer, preferably at least 98.5wt%, more preferably 98.8, more preferably 99wt%, more preferably 99.3wt%, more preferably 99.5wt%, more preferably 99.8wt%, for example 99.9wt% of a linear low density polyethylene based on the first outer layer.

For example, the first outer layer consists essentially of a linear low density polyethylene based on the first outer layer.

With linear low density polyethylene (LLDPE) as used herein is meant a low density polyethylene copolymer comprising ethylene and a C3- C10 alpha-olefin co monomer (ethylene-alpha olefin copolymer) having a density from 915 to 934 kg/m³.
Alpha-olefin co monomers include 1-butene, 1-hexene, 4-methyl pentene and 1-octene. Preferably, the alpha-olefin co monomer is present in an amount of about 5 to about 20 percent by weight of the ethylene-alpha olefin copolymer, for example in an amount of from about 7 to about 15 percent by weight of the ethylene-alpha olefin copolymer.

For purpose of the invention, the density of the linear low density polyethylene is determined using ISO1872-2.

Preferably, the melt flow index of the linear low density polyethylene ranges from 1.8 to 4.5g/10min (for production of the film using cast film technology), for example from 2 to 4 g/10min. For purpose of the invention, the melt flow index is determined herein using ISO1133:2011 (190°C/2.16kg).

The production processes of VLDPE and LLDPE are summarised in Handbook of Polyethylene by Andrew Peacock (2000; Dekker; ISBN 0824795466) at pages 43-66. The catalysts can be divided in three different subclasses including Ziegler Natta catalysts, Phillips catalysts and single site catalysts. The latter class is a family of different classes of compounds, metallocene catalysts being one of them. As elucidated at pages 53-54 of said Handbook a Ziegler-Natta catalysed polymer is obtained via the interaction of an organometallic compound or hydride of a Group I-III metal with a derivative of a Group IV-VIII transition metal. An example of a (modified) Ziegler-Natta catalyst is a catalyst based on titanium tetra chloride and the organometallic compound triethylaluminium. A difference between metallocene catalysts and Ziegler Natta catalysts is the distribution of active sites. Ziegler Natta catalysts are heterogeneous and have many active sites. Consequently polymers produced with these different catalysts will be different regarding for example the molecular weight distribution and the comonomer distribution.

The technologies suitable for the LLDPE manufacture include but are not limited to gas- phase fluidized-bed polymerization, polymerization in solution, and slurry polymerization.
The LLDPE may for example be obtained by gas phase polymerization in the presence of a Ziegler-Natta catalyst or may for example be obtained by gas phase polymerization in the presence of a metallocene catalyst.

The LLDPE in the first outer layer is preferably a polyethylene copolymer comprising ethylene and 1-hexene, 1-butene or 1-octene, preferably 1-butene.

Preferably, the density of the LLDPE in the first outer layer is from 918 to 935 kg/m³.

Preferably, the melt flow index of the LLDPE in the first outer layer ranges from 1.8 to 4.5g/10min (for production of the film using cast film technology), for example from 2 to 4 g/10min.

With inner layer is meant that the layer of the multilayer film is not on the outside of the film.

At least one of the inner layers, for example 2, 3 or 4 of the inner layer(s) comprise(s) at least 98wt% of a propylene homopolymer or 98wt% of a propylene ethylene copolymer.

In the multilayer film of the invention at least one of the inner layers comprises at least 98wt% of a propylene homopolymer or 98wt% of a propylene ethylene copolymer based on the inner layer, preferably at least 98.5wt%, more preferably 98.8, more preferably 99wt%, more preferably 99.3wt%, more preferably 99.5wt%, more preferably 99.8wt%, for example 99.9wt% of a propylene homopolymer or of a propylene ethylene copolymer based on the inner layer.

With propylene homopolymer is meant a polymer that is prepared from propylene monomers only.

With propylene ethylene copolymer is meant a copolymer of propylene with ethylene, wherein the ethylene is randomly distributed within the polymeric chain.

The amount of ethylene in the propylene ethylene copolymer may vary for example from 1 to 10 wt%, for example from 1 to 5 wt% based on the propylene ethylene copolymers, for example from 3 to 5 wt%.

Preferably, the MFI of the propylene homopolymer or of the propylene ethylene copolymer is chosen in the range from 7 to 10 g/10min. For purpose of the present invention, melt flow index (MFI) is determined by measuring the melt flow rate, also called melt flow or melt index according to ISO1133 (2.16 kg/230°C).

Preferably, the density of the propylene homopolymer or of the propylene ethylene copolymer is chosen in the range from 902-908, for example around 905 kg/m³.

Most preferably, a propylene ethylene copolymer is used in at least one of the inner layers, more preferably having an amount of ethylene in the propylene copolymer in the range from 1 to 10wt%, for example from 1 to 5wt%, preferably from 3 to 5 wt% based on the propylene ethylene copolymer, preferably a propylene ethylene copolymer having a density in the range from 902-908 kg/m³ and/or a melt flow index in the range from 7 to 10g/10 min.

The other inner layer(s) of the multilayer film comprise(s) at least 98wt% based on the layer of a linear low density polyethylene, preferably at least 98.5wt%, more preferably 98.8, more preferably 99wt%, more preferably 99.3wt%, more preferably 99.5wt%, more preferably 99.8wt%, for example 99.9wt% of a linear low density polyethylene based on the inner layer.

For example, the other inner layer(s) consist(s) essentially of a linear low density polyethylene based on the inner layer.

Preferably, the density of the LLDPE in the inner layer(s) is from 917 to 920 kg/m³.

Preferably, the melt flow index of the LLDPE in the inner layer(s) ranges from 1.8 to 4.5g/10min (for production of the film using cast film technology), for example from 2 to 4 g/10min.

The LLDPE in the inner layer(s) may for example be a polyethylene copolymer comprising ethylene and a comonomer chosen from the group of 1-hexene, 1-butene and 1-octene, preferably 1-butene or may be a linear low density polyethylene produced using a metallocene catalyst.

The second outer layer comprises 70% to 30wt% of a linear low density polyethylene and 30 to 70wt% very low density polyethylene (VLDPE). The person skilled in the art is aware that the optimal amount balance of VLDPE and LLDPE in the outer layer of a stretch film depends on the environmental (weather) conditions under which its use is intended.

With very low density polyethylene (VLDPE) as used herein is meant a low density polyethylene copolymer comprising ethylene and a C6- C8 alpha-olefin co monomer (ethylene-alpha olefin copolymer), wherein the very low density polyethylene copolymer has a density from 900 to 915 kg/m³, preferably from 900 to 905 kg/m³.

C6- C8 alpha-olefin co monomers include 1-octene and 1-hexene, for example 1-hexene. Preferably, the C6-C8 alpha-olefin co monomer is present in an amount of about 3 to about 20 percent by weight of the ethylene-alpha olefin copolymer, for example in an amount of from about 5 to about 10 percent by weight of the ethylene-alpha olefin copolymer.

For purpose of the invention, the density of the VLDPE is determined using ISO1872-2.

Preferably, the melt flow index of the very low density polyethylene ranges from 1.8 to 4.5g/10min for production of the film using cast film technology), for example from 2 to 4 g/10min.

The technologies suitable for the VLDPE manufacture include but are not limited to gas- phase fluidized-bed polymerization and polymerization in solution.
The VLDPE may for example be obtained (by gas phase polymerization) in the presence of a Ziegler-Natta catalyst or may for example be obtained (by gas phase polymerization) in the presence of a metallocene catalyst.

The density of the LLDPE in the second outer layer is preferably in the range from 918 to 935 kg/m³, for example in the range from 920 to 935 kg/m³.

Preferably, the melt flow index of the LLDPE in the second outer layer ranges from 1.8 to 4.5g/10min (for production of the film using cast film technology), for example from 2 to 4 g/10min.

The LLDPE in the second outer layer may for example be a polyethylene copolymer comprising ethylene and a comonomer chosen from the group of 1-hexene, 1-butene and 1-octene, preferably 1-butene or may be a linear low density polyethylene produced using a metallocene catalyst.

The VLDPE and the LLDPE used in the second outer layer may be blended by melt-mixing.

Melt-mixing may be done using techniques known to the skilled person, for example in an extruder.

Suitable conditions for melt-mixing, such as temperature, pressure, amount of shear, screw speed, residence time and screw design when an extruder is used are known to the skilled person.

When using an extruder, a conventional extruder such as a twin-screw extruder may be used.

With first outer layer and second outer layer are meant the layers that are located on the outside of the film. As compared to other layers in the multilayer film of the invention, the first outer layer and the second outer layer have a substantially larger portion of the layer that faces the outside. With inside layer is meant a layer that is located between the first outer layer and the second outer layer. An inside layer may have direct contact with the outer layer, but may also not be in direct contact with the first outer or the second outer layer, for example may only have indirect contact with the first outer layer or the second outer layer through one or more layers.

The first outer layer preferably constitutes from 10 to 20wt% of the multi-layer film, for example around 15wt%. The second outer layer preferably constitutes from 10 to 20wt% of the multi-layer film, for example around 15wt%. The inner layer(s) comprising the propylene polymer or the propylene ethylene copolymer preferably constitute(s) from 5 to 35wt% of the multi-layer film, preferably from 5 to 15wt%, for example from 10 to 15wt%. The inner layer(s) comprising the LLDPE preferably constitute from 25 to 75wt%, for example from 30 to 65wt%, for example from 35 to 45wt% or for example 55 to 65wt% of the multi-layer film.

For example, at least two inner layers may be of the same material (e.g. comprise all the same components in the same amounts). For instance at least two inner layers may comprise 98wt% of the same propylene homopolymer or 98wt% of the same propylene ethylene copolymer. For instance, at least two inner layers may comprise at least 98wt% of a linear low density polyethylene.

The thickness of the multilayer film is preferably in the range from 15 to 25 microns. Since down-gauging is desired, the film thickness may be reduced to for example a thickness in the range from 15 to 17 µm (also indicated herein as microns).

If more than 5 layers are present in the multilayer film of the invention, the further layers may comprise at least 98wt%, preferably at least 98.5wt%, more preferably 98.8, more preferably 99wt%, more preferably 99.3wt%, more preferably 99.5wt%, more preferably 99.8wt%, for example 99.9wt% of a propylene homopolymer; or at least 98wt%, preferably at least 98.5wt%, more preferably 98.8, more preferably 99wt%, more preferably 99.3wt%, more preferably 99.5wt%, more preferably 99.8wt%, for example 99.9wt% of a propylene ethylene copolymer; or at least 98wt%, preferably at least 98.5wt%, more preferably 98.8, more preferably 99wt%, more preferably 99.3wt%, more preferably 99.5wt%, more preferably 99.8wt%, for example 99.9wt% of a linear low density polyethylene.

The preferences for the linear low density polyethylene, the propylene homopolymer and propylene ethylene copolymer of the additional inner layers are the same as described herein.

In a special embodiment, the invention relates to a multilayer film according to invention,
wherein the first outer layer comprises linear low density polyethylene wherein the linear low density polyethylene is a low density polyethylene copolymer comprising ethylene and 1-butene or ethylene and 1-hexene or ethylene and 1-octene, preferably wherein the linear low density polyethylene is not produced using a metallocene catalyst
wherein at least one of the inner layers comprises a propylene homopolymer or a propylene ethylene copolymer, preferably a propylene ethylene copolymer
wherein at least one of the inner layers comprises linear low density polyethylene wherein the linear low density polyethylene is produced using a metallocene catalyst
wherein at least one of the inner layers comprises a linear low density polyethylene wherein the linear low density polyethylene is a low density polyethylene copolymer comprising ethylene and 1-butene or ethylene and 1-hexene or ethylene and 1-octene, preferably wherein the linear low density polyethylene is not produced using a metallocene catalyst
wherein the second outer layer comprises very low density polyethylene and linear low density polyethylene, wherein the VLDPE is a low density polyethylene copolymer comprising ethylene and 1-hexene or ethylene and 1-octene, preferably ethylene and 1-hexene and wherein the linear low density polyethylene is a low density polyethylene copolymer comprising ethylene and 1-butene or ethylene and 1-hexene or ethylene and 1-octene, preferably wherein the very low density polyethylene and the linear low density polyethylene are not produced using a metallocene catalyst.

More preferably, the invention relates to a multilayer film according to the invention wherein the first outer layer comprises linear low density polyethylene wherein the linear low density polyethylene is a low density polyethylene copolymer comprising ethylene and 1-butene or ethylene and 1-hexene or ethylene and 1-octene.
wherein at least one of the inner layers comprises a propylene homopolymer or a propylene ethylene copolymer, preferably a propylene ethylene copolymer
wherein at least one of the inner layers comprises linear low density polyethylene wherein the linear low density polyethylene is produced using a metallocene catalyst
wherein at least one of the inner layers comprises a linear low density polyethylene wherein the linear low density polyethylene is a low density polyethylene copolymer comprising ethylene and 1-butene or ethylene and 1-hexene or ethylene and 1-octene
wherein the second outer layer comprises very low density polyethylene and linear low density polyethylene, wherein the VLDPE is a low density polyethylene copolymer comprising ethylene and 1-hexene or ethylene and 1-octene, preferably ethylene and 1-hexene and wherein the linear low density polyethylene is a low density polyethylene copolymer comprising ethylene and 1-butene or ethylene and 1-hexene or ethylene and 1-octene
wherein the first outer layer constitutes from 10 to 20wt% of the multi-layer film, for example around 15wt%
wherein the second outer layer constitutes from 10 to 20wt% of the multi-layer film, for example around 15wt%.
wherein the inner layer(s) comprising a propylene homopolymer or a propylene ethylene copolymer, preferably a propylene ethylene copolymer constitute(s) from 5 to 35wt% of the multi-layer film, preferably from 5 to 15wt%, for example from 10 to 15wt%.
wherein the inner layer(s) comprising a linear low density polyethylene wherein the linear low density polyethylene is a low density polyethylene copolymer comprising ethylene and 1-butene or ethylene and 1-hexene or ethylene and 1-octene constitute(s) from 15 to 45 wt% of the multi-layer film.
wherein the inner layer(s) comprising a linear low density polyethylene wherein the linear low density polyethylene is produced using a metallocene catalyst constitute(s) from 15 to 45 wt% of the multi-layer film.

In a special embodiment, the invention relates to a multilayer film according to the invention comprising, preferably in the following order,
a. a first outer layer comprising at least 98 wt% of a linear low density polyethylene, wherein the linear low density polyethylene is a low density polyethylene copolymer comprising ethylene and 1-butene
b. a first inner layer
c. a second inner layer
d. a third inner layer
e a second outer layer comprising 70% to 30wt% of a linear low density polyethylene and 30 to 70wt% VLDPE,
wherein at least one of the inner layers comprises at least 98wt% of a propylene ethylene copolymer
and wherein the other inner layer(s) comprise(s) at least 98wt% of a linear low density polyethylene, wherein at least one of the inner layers comprises a linear low density polyethylene wherein the linear low density polyethylene is produced using a metallocene catalyst and optionally wherein at least one of the inner layers comprises at least 98wt% of a linear low density polyethylene, wherein the linear low density polyethylene is a low density polyethylene copolymer comprising ethylene and 1-butene
wherein the second outer layer comprises very low density polyethylene and linear low density polyethylene, wherein the VLDPE is a low density polyethylene copolymer comprising ethylene and 1-hexene and wherein the linear low density polyethylene is a low density polyethylene copolymer comprising ethylene and 1-butene.

Preferably in this embodiment, the first outer layer constitutes from 10 to 20wt% of the multi-layer film, for example around 15wt%
the second outer layer constitutes from 10 to 20wt% of the multi-layer film, for example around 15wt%
the inner layer(s) comprising the propylene ethylene copolymer constitute(s) from 5 to 35wt% of the multi-layer film, preferably from 5 to 15wt%, for example from 10 to 15wt%.
and wherein the inner layer(s) comprising a linear low density polyethylene constitute from 25 to 75wt% of the multilayer film, for example from 30 to 60wt%.

More preferably, in this embodiment, the layers comprising linear low density polyethylene comprising ethylene and 1-butene constitute from 50 to 60wt% of the multi-layer film, the layers comprising linear low density polyethylene produced using a metallocene catalysts constitute from 30 to 40wt% of the multi-layer film and the layers comprising propylene homopolymer or propylene ethylene copolymer, preferably propylene ethylene copolymer constitute from 5 to 15% of the multi-layer film, preferably around 10wt%.

In another special embodiment, the invention relates to a stretchable multilayer film according to the invention comprising, preferably comprising in the following order,
a. a first outer layer comprising at least 98 wt% of a linear low density polyethylene, wherein the linear low density polyethylene is a low density polyethylene copolymer comprising ethylene and 1-butene, preferably wherein the linear low density polyethylene is not produced using a metallocene catalyst
b. a first inner layer
c. a second inner layer
d. a third inner layer
e a second outer layer comprising 70% to 30wt% of a linear low density polyethylene and 30 to 70wt% VLDPE,
wherein at least one of the inner layers, preferably at least two of the inner layers comprise(s) at least 98wt% of a propylene ethylene copolymer
and wherein the other inner layer(s) comprise(s) at least 98wt% of a linear low density polyethylene, wherein at least one of the inner layers comprises a linear low density polyethylene wherein the linear low density polyethylene comprises ethylene and 1-hexene, preferably wherein the linear low density polyethylene is not produced using a metallocene catalyst
wherein the second outer layer comprises very low density polyethylene and linear low density polyethylene, wherein the VLDPE is a low density polyethylene copolymer comprising ethylene and 1-hexene and wherein the linear low density polyethylene is a low density polyethylene copolymer comprising ethylene and 1-butene, preferably wherein the very low density polyethylene and the linear low density polyethylene are not produced using a metallocene catalyst

It has been found that even in the absence of a layer comprising at least 98wt% of LLDPE produced by polymerization in the presence of a metallocene catalyst, an inner layer comprising at least 98wt% of propylene ethylene copolymer significantly improved the impact resistance of the multilayer film, while maintaining other properties such as for example holding force.

This is surprising, because films based on only linear low density polyethylene produced by using a non-metallocene catalyst and being a low density polyethylene copolymer comprising ethylene and 1-butene or comprising ethylene and 1-hexene are known to have less impact resistance than films comprising a linear low density polyethylene produced using a metallocene catalyst.

This finding offers the possibility to produce multilayer stretch films produced by using a non-metallocene catalyst and being a low density polyethylene copolymer comprising ethylene and 1-butene or comprising ethylene and 1-hexene, preferably comprising ethylene and 1-butene (which are more cost effective than LLDPEs produced using a metallocene catalyst), while obtaining an impact resistance sufficient for the stretch film application.

Preferably in this embodiment, the first outer layer constitutes from 10 to 20wt% of the multi-layer film, for example around 15wt%
the second outer layer constitutes from 10 to 20wt% of the multi-layer film, for example around 15wt%
the inner layer(s) comprising the propylene ethylene copolymer constitute(s) from 5 to 35wt% of the multi-layer film, preferably from 5 to 15wt%, for example from 10 to 15wt%.
and the inner layer(s) comprising a linear low density polyethylene constitute from 20 to 40wt%, for example from 25-35wt%.

In a special embodiment, the invention relates to a stretchable multilayer film according to the invention comprising, preferably in the following order,
a. a first outer layer comprising at least 98 wt% of a linear low density polyethylene, wherein the linear low density polyethylene is a low density polyethylene copolymer comprising ethylene and 1-butene, preferably wherein the linear low density polyethylene is not produced using a metallocene catalyst
b. a first inner layer
c. a second inner layer
d. a third inner layer
e a second outer layer comprising 70% to 30wt% of a linear low density polyethylene and 30 to 70wt% VLDPE,
wherein at least one of the inner layers comprises at least 98wt% of a propylene ethylene copolymer
and wherein the other inner layer(s) comprise(s) at least 98wt% of a linear low density polyethylene, wherein the linear low density polyethylene is a low density polyethylene copolymer comprising ethylene and 1-butene, preferably wherein the linear low density polyethylene is not produced using a metallocene catalyst
wherein the second outer layer comprises very low density polyethylene and linear low density polyethylene, wherein the VLDPE is a low density polyethylene copolymer comprising ethylene and 1-hexene and wherein the linear low density polyethylene is a low density polyethylene copolymer comprising ethylene and 1-butene, preferably wherein the linear low density polyethylene and the very low density polyethylene are not produced using a metallocene catalyst

This embodiment offers a very cost effective stretch film solution, while at the same time the properties are sufficient for the intended stretch film applications, such as the stretch wrapping of beverages, such as (sparkling) beverages in (plastic) bottles, where a high holding force is needed.

Preferably in this embodiment, the first outer layer constitutes from 10 to 20wt% of the multi-layer film, for example around 15wt%
the second outer layer constitutes from 10 to 20wt% of the multi-layer film, for example around 15wt%
the inner layer(s) comprising the propylene ethylene copolymer constitute(s) from 5 to 15wt%, for example from 10 to 15wt%.
and the inner layer(s) comprising a linear low density polyethylene constitute from 25 to 75wt% of the multilayer film, for example from 30 to 60wt%.

Each layer may also contain appropriate amounts of other additives such as for example antioxidants and stabilizers. Typically, additives may be present in a layer in an amount of 10 to 10000ppm, for example in an amount of 100 to 5000ppm based on the layer. Therefore, the invention also relates to a multi-layer film wherein one or more layers further comprise(s) one or more additives.

For example, each layer in the multilayer film of the invention may comprise an amount of additives of 0 to 2wt% based on the total weight of the layer and 98 to 100wt% of the polymer(s), wherein the sum of the polymer(s) and the additives is 100wt% based on the total weight of the layer.

The multilayer films of the present invention may be prepared by any method known in the art, for instance using casting or cast film extrusion. The preparation of a multilayer film by casting is well-known in the art. The preparation of the multilayer film according to the invention may be done as described in "Handbook of plastic films" (E.M. Abdel-Bary, iSmithers Rapra Publishing, 2003, pages 16-17).

In general, casting is a continuous operation of melting and conveying a polymer in a heated screw-and-barrel assembly. Polymer is extruded through a slit onto a chilled, highly polished turning roll, where it is quenched from one side. Film is sent to a second roller for cooling on the other side. Alternatively, polymer web is passed through a quench tank for cooling. Film then passes through a system of rollers, which have different purposes, and is finally wound onto a roll for storage.

In another aspect, the invention relates to a process for the preparation of a multilayer film according to the invention, wherein the multilayer film is prepared by a cast film extrusion process.

In another aspect, the invention relates to a process for wrapping an object which comprises a plurality of individual articles, preferably substantially identical articles, comprising
i) obtaining a multilayer film according to the invention
ii) stretching and wrapping said multilayer film around said object in order to obtain a wrapped object.

In another aspect, the invention also relates to the use of a multilayer film according to the invention for stretch wrapping around a plurality of individual articles.

The individual articles may for example be beverages, such as (sparkling) beverages in (plastic) bottles together with the pallet on which the beverages are placed.

In yet another aspect, the invention relates to an object comprising a plurality of individual articles, preferably substantially identical articles, wherein the object is stretch wrapped by a multilayer film according to the invention.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

### Examples

### Structure 1

Structure 1 highlights a stretchable multilayer film consisting of
a. a first outer layer comprising at least 99.5 wt% of a linear low density polyethylene having a melt flow index in the range from 2.5 to 3 g/10min and having a density in the range from 917 to 920 kg/m³ and wherein the linear low density polyethylene comprises ethylene and 1-butene
b. a first inner layer comprising at least 99.5wt% of a propylene ethylene copolymer having a melt flow index in the range from 7 to 9 g/10min and having a density in the range from 902 to 908kg/m3 wherein the amount of ethylene in the propylene ethylene copolymer is 3-5wt% based on the propylene ethylene copolymer
c. a second inner layer comprising at least 99.5wt% of a linear low density polyethylene having a melt flow index in the range from 3 to 4 g/10min and having a density in the range from 917 to 920 kg/m³, wherein the linear low density polyethylene is produced using a metallocene catalyst and wherein the linear low density polyethylene comprises ethylene and 1-hexene
d. a third inner layer comprising at least 99.5wt% of a linear low density polyethylene comprising ethylene and 1-butene, wherein the linear low density polyethylene has a melt flow index in the range from 2.5 to 3 g/10min and having a density in the range from 917 to 920 kg/m³
e a second outer layer comprising 70% to 30wt% of a linear low density polyethylene comprising ethylene and 1-butene and having a melt flow index in the range from 2.5 to 3 g/10min and having a density in the range from 917-920 kg/m³
   and 30 to 70wt% of a very low density polyethylene comprising ethylene and 1-hexene, having a melt flow index in the range from 3 to 5 g/10min and a having a density in the range from 900 to 910, preferably from 900 to 905 kg/m³,
wherein the first outer layer constitutes from 10 to 20wt% of the multi-layer film, for example around 15wt%
wherein the second outer layer constitutes from 10 to 20wt% of the multi-layer film, for example around 15wt%
the inner layer comprising the propylene ethylene copolymer constitutes from 5 to 15wt%, for example from 10 to 15wt%
and the inner layers comprising a linear low density polyethylene constitute from 45 to 75wt% of the multi-layer film, for example around 60wt%,
preferably wherein the thickness of the multi-layer film is 15 to 17µm (micron).

Preferably, the multi-layer film mentioned above, comprises the layers in the order as mentioned.

### Structure 2

Structure 2 highlights a stretchable multilayer film consisting of
a. a first outer layer comprising at least 99.5 wt% of a linear low density polyethylene having a melt flow index in the range from 2.5 to 3 g/10min and having a density in the range from 917 to 920 kg/m³ and wherein the linear low density polyethylene comprises ethylene and 1-butene
b. a first inner layer comprising at least 99.5wt% of a propylene ethylene copolymer having a melt flow index in the range from 7 to 9 g/10min and having a density in the range from 902 to 908 kg/m³, wherein the amount of ethylene in the propylene ethylene copolymer is 3-5wt% based on the propylene ethylene copolymer
c. a second inner layer comprising at least 99.5wt% of a linear low density polyethylene having a melt flow index in the range from 2 to 3 g/10min and having a density in the range from 917 to 920 kg/m³, wherein the linear low density polyethylene is produced using a Ziegler Natta catalyst and wherein the linear low density polyethylene comprises ethylene and 1-hexene
d. a third inner layer comprising at least 99.5wt% of a propylene ethylene copolymer having a melt flow index in the range from 7 to 9 g/10min and having a density in the range from 902 to 908 kg/m³ , wherein the amount of ethylene in the propylene ethylene copolymer is 3-5wt% based on the propylene ethylene copolymer
e a second outer layer comprising 70% to 30wt% of a linear low density polyethylene comprising ethylene and 1-butene having a melt flow index in the range from 2.5 to 3 g/10min and having a density in the range from 917-920 kg/m³
   and 30 to 70wt% of a very low density polyethylene comprising ethylene and 1-hexene, having a melt flow index in the range from 3 to 5 g/10min and a having a density in the range from 900 to 910, preferably from 900 to 905 kg/m³,
wherein the first outer layer constitutes from 10 to 20wt% of the multi-layer film, for example around 15wt%
wherein the second outer layer constitutes from 10 to 20wt% of the multi-layer film, for example around 15wt%
the inner layers comprising the propylene ethylene copolymer constitutes from 10 to 35wt%, for example around 30wt%
and the inner layer comprising the linear low density polyethylene constitute from 30 to 60wt% of the multi-layer film, for example around 40wt%,
preferably wherein the thickness of the multi-layer film is 15 to 17µm (micron).

Preferably, the multi-layer film mentioned above, comprises the layers in the order as mentioned.

### Production of structures 1 and 2 and comparative reference structures 1 and 2

Two 5-layers film structures were produced: structure 1 and structure 2.

Structure 1 was produced on SML cast line equipped with 2500mm wide flat die and five extruders to provide the layers of the film structure. Extruders were set with barrier screws L/D=30 and distribution dimension was Ø 90/120/120/120/90mm. Total film thickness was in between 15 µm-17µm. The flat die was set with gap of 0.8 mm. The overall throughput was 800 kg/h with chill roll speed at 360 m/min. Barrel temperature profiles were ramped from 100°C at the feed section to 260°C at the die. Chill roll water inlet temperature was 25° C at first chill roll and 27° C at second one. The line was equipped with thickness profile measurement and contact winder.

The materials used and their melt flow index as determined using ISO1133:2011 (2.16kg/10min at 190°C) and their density are indicated in Table 1 below.

**Table 1. Materials used in the 5-layer structure 1.**

| abbreviation | Grade | Polymer type | MFI [2.16kg/10min at 190°C] | Density [kg/m3] |
|---|---|---|---|---|
| C4-LLDPE | SABIC®LLDPE 318BE | LLDPE | 2.8 | 918 |
| C6-mLLDPE | ExxonMobil 3518CB | LLDPE produced using a metallocene catalyst | 3.5 | 918 |
| Random PP | SABIC®621P | PP _{(ethylene content 4wt.%)} | 8.0 | 905 |
| C6-VLDPE | Attane 4607G | VLDPE | 4.0 | 904 |

| | | | | |
|---|---|---|---|---|
| C4: 1-butene as comonomer C6: 1-hexene as comonomer | | | | |

**Table 2. Summarize the layers distribution of film structure 1 and its comparative example reference structure 1.**

| Structure 1 | | |
|---|---|---|
| Layer | Polymer type | Layer distribution (wt% based on total film) |
| Layer 1 | C4-LLDPE | 15% |
| Layer 2 | Random PP | 10% |
| Layer 3 | C6-mLLDPE | 30% |
| Layer 4 | C4-LLDPE | 30% |
| Layer 5 | C4-LLDPE + C6-VLDPE | 15% |

| Comparative example of structure 1 | | |
|---|---|---|
| Layer | Polymer type | Layer distribution (wt% based on total film) |
| Layer 1 | C4-LLDPE | 15% |
| Layer 2 | C4-LLDPE | 20% |
| Layer 3 | C6-mLLDPE | 30% |
| Layer 4 | C4-LLDPE | 20% |
| Layer 5 | C4-LLDPE + C6-VLDPE | 15% |

Structure 2 was produced on a cast line owned by Colines equipped with 1500mm wide flat die and four extruders to provide the layers of the film structure. Extruders were set with barrier screws L/D=30 and distribution dimension was Ø 90/120/160/90mm. Total film thickness was in between 15 µm-17µm. The flat die was set with gap of 0.8 mm. The overall throughput was 500 kg/h with chill roll speed at 400 m/min. Barrel temperature profiles were ramped from 90°C at the feed section to 260°C at the die. Chill roll water inlet temperature was 25° C. The line was equipped with thickness profile measurement and contact winder.

The materials used and their melt flow index as determined using ISO1133:2011 (2.16kg/10min at 190°C) and their density are indicated in Table 1 below.

**Table 3. Materials used in the 5-layer film of structure 2.**

| Abbreviation | Grade | Polymer type | MFI [2.16kg/10min at 190°C] | Density [kg/m3] |
|---|---|---|---|---|
| C4-LLDPE | SABIC®LLDPE 318BE | LLDPE | 2.8 | 918 |
| C6-LLDPE | SABIC®LLDPE 6218BE | LLDPE | 2.2 | 918 |
| Random PP | SABIC®621P | PP _{(ethylene 4%)} | 8.0 | 905 |
| C6-VLDPE | Attane 4607G | VLDPE | 4.0 | 904 |

| | | | | |
|---|---|---|---|---|
| C4: 1-butene as comonomer C6: 1-hexene as comonomer | | | | |

**Table 4. Summarize the layers distribution of film structure 2 and its comparative example reference structure 2.**

| Structure 2 | | |
|---|---|---|
| layer | Polymer type | Layer distribution (wt% based on total film) |
| Layer 1 | C4-LLDPE | 15% |
| Layer 2 | Random PP | 14% |
| Layer 3 | C6-LLDPE | 42% |
| Layer 4 | Random PP | 14% |
| Layer 5 | C4-LLDPE + C6-VLDPE | 15% |

| Reference structure 2 | | |
|---|---|---|
| layer | Polymer type | Layer distribution (wt% based on total film) |
| Layer 1 | C4-LLDPE | 15% |
| Layer 2 | C6-LLDPE | 20% |
| Layer 3 | C6-LLDPE | 30% |
| Layer 4 | C6-LLDPE | 20% |
| Layer 5 | C4-LLDPE + C6-VLDPE | 15% |

**Table 5. Measurements**

| Film property | Norm | Reference structure 1 | Structure 1 | Reference structure 2 | Structure 2 |
|---|---|---|---|---|---|
| Holding Force (kg) | HIGHLIGHT method | 25 | 28 | 26 | 29 |
| Stretch-ability (%) | HIGHLIGHT method | 250 | 250 | 250 | 200 |
| Impact resistance (g/µm) | ASTM D1709-04 | 5.6 | 5.73 | 3.34 | 4.18 |
| Tear resistance TD (kJ/m²) | ASTM D1922-00a | 194 | 198 | 475 | 584 |
| Haze | ASTM D1003-07 | good | good | 1.8 | 1.4 |
| Gloss (45°) | ASTM D2457-03 | good | good | 91 | 92 |

| | | | | | |
|---|---|---|---|---|---|
| good: Good optical properties as determined visually, because of this, the haze and gloss values were not determined. TD transverse direction (perpendicular to the direction of the extrusion) | | | | | |

### How holding force was measured (HIGHLIGHT method).

In order to measure holding force a tailor made instrument produced by company HIGHLIGHT Industries Ltd was used using the conditions recommended by the manufacturer. This instrument, which is very well known in the stretch market and recognized as a reference method worldwide, is able to determine the holding force that a stretch film can provide on unitized goods after being stretched to a desired level. The interesting thing is that this instrument can measure the holding force and stretch-ability on real shape stretch film, providing measurements directly related to the film application in use. The instruments comprise two driven rollers where stretch film is elongated at a certain stretching level, on real dimensions (film width 500mm - 750mm). The rollers are also able to measure the force necessary to elongate the stretch film, as a result the instruments determines the holding force (by the ultimate force) at a specific stretching value (here 250 % stretch). The holding force measured as described predicts the force of containment that a stretch film applies to unitized goods.

### Conclusion

As can be seen from the above table, by using the multilayer films according to the invention, i.e. those multilayer films comprising an inner layer comprising at least 98wt% of propylene ethylene copolymer, holding force is improved as well as tear resistance in transverse direction. Additionally, optical properties are maintained and stretchability is sufficient for power stretch film applications, such as the stretch wrapping of (sparkling) beverages in (plastic) bottles.

Impact resistance of structure 1 and of comparative structure 1 are comparable. The good impact resistance of these structures is due to the presence of a layer comprising at least 98wt% of LLDPE produced by polymerization in the presence of a metallocene catalyst.

Surprisingly, when this layer was absent (and the only LLDPEs present were a C4 and a C-6 LLDPE, which are known to have a lesser impact resistance), an inner layer comprising at least 98wt% of propylene ethylene copolymer significantly improved the impact resistance of the multilayer film. (Compare the impact resistance of structure 2 to the impact resistance of reference structure 2).

This finding offers the possibility to produce multilayer stretch films based on C4 and/or C6 -LLDPE (which are more cost effective than LLDPEs produced using a metallocene catalyst), while obtaining an impact resistance comparable to that of a multilayer stretch film containing an LLDPE produced using a metallocene catalyst (also indicated herein as mLLDPE).

## Claims

1. Stretchable multilayer film comprising in the following order
a. a first outer layer comprising at least 98 wt% of a linear low density polyethylene
b. a first inner layer
c. a second inner layer
d. a third inner layer
e. a second outer layer comprising 70% to 30wt% of a linear low density polyethylene and 30 to 70wt% very low density polyethylene (VLDPE),
wherein linear low density polyethylene has a density from 915 to 934 kg/m³ as determined according to ISO 1872-2 and the VLDPE has a density of from 900 to 915 kg/m³ as determined according to ISO 1872-2; wherein
the first inner layer and/or the third inner layer
- comprise(s) at least 98wt% of a propylene homopolymer or 98 wt% of a propylene ethylene copolymer, wherein the other inner layer(s) comprise(s) at least 98wt% of a linear low density polyethylene; or
- consist(s) essentially of a propylene homopolymer or consist(s) essentially of a propylene ethylene copolymer, wherein the other inner layer(s) consist(s) essentially of a linear low density polyethylene;
wherein the first inner layer is in direct contact with the first outer layer, and the third inner layer is in direct contact with the second outer layer.

2. Multilayer film according to claim 1, wherein the propylene ethylene copolymer used is a propylene ethylene copolymer having an amount of ethylene in the propylene copolymer in the range from 1 to 5wt%, preferably from 3 to 5 wt% based on the propylene ethylene copolymer.

3. Multilayer film according to any one of claims 1-2, wherein the density of the linear low density polyethylene in the inner layer(s) is from 917 to 920 kg/m³ and preferably wherein the melt flow index of the linear low density polyethylene in the inner layer(s) ranges from 1.8 to 4.5g/10min, preferably from 2 to 4 g/10min.

4. Multilayer film according to any one of claims 1-3, wherein the thickness of the multilayer film is in the range from 15 to 25 microns, preferably in the range from 15 to 17 µm.

5. Multilayer film according to any one of claims 1-4, comprising one or more further layers which layers each individually comprise at least 98wt% of a propylene homopolymer and/or at least 98wt% of a propylene ethylene copolymer and/or at least 98wt% of a linear low density polyethylene.

6. Multilayer film according to any one of claims 1-5,
wherein the first outer layer comprises linear low density polyethylene, wherein the linear low density polyethylene is a low density polyethylene copolymer comprising ethylene and 1-butene or ethylene and 1-hexene or ethylene and 1-octene
wherein at least one of the first inner layer and/or the third inner layer comprises a propylene homopolymer or a propylene ethylene copolymer, preferably a propylene ethylene copolymer
wherein at least one of the inner layers comprises linear low density polyethylene wherein the linear low density polyethylene is produced using a metallocene catalyst
wherein at least one of the inner layers comprises a linear low density polyethylene wherein the linear low density polyethylene is a low density polyethylene copolymer comprising ethylene and 1-butene or ethylene and 1-hexene or ethylene and 1-octene
wherein the second outer layer comprises very low density polyethylene and linear low density polyethylene, wherein the VLDPE is a low density polyethylene copolymer comprising ethylene and 1-hexene or ethylene and 1-octene, preferably ethylene and 1-hexene and wherein the linear low density polyethylene is a low density polyethylene copolymer comprising ethylene and 1-butene or ethylene and 1-hexene or ethylene and 1-octene.

7. Multilayer film according to claim 6 comprising
a. a first outer layer comprising at least 98 wt% of a linear low density polyethylene, wherein the linear low density polyethylene is a low density polyethylene copolymer comprising ethylene and 1-butene
b. a first inner layer
c. a second inner layer
d. a third inner layer
e. a second outer layer comprising 70% to 30wt% of a linear low density polyethylene and 30 to 70wt% VLDPE,
wherein at least one of the first inner layer and/or the third inner layer comprises at least 98wt% of a propylene ethylene copolymer
and wherein the other inner layer(s) comprise(s) at least 98wt% of a linear low density polyethylene, wherein at least one of the inner layers comprises a linear low density polyethylene wherein the linear low density polyethylene is produced using a metallocene catalyst and optionally wherein at least one of the inner layers comprises at least 98wt% of a linear low density polyethylene, wherein the linear low density polyethylene is a low density polyethylene copolymer comprising ethylene and 1-butene
wherein the second outer layer comprises very low density polyethylene and linear low density polyethylene, wherein the VLDPE is a low density polyethylene copolymer comprising ethylene and 1-hexene and wherein the linear low density polyethylene is a low density polyethylene copolymer comprising ethylene and 1-butene.

8. Multilayer film according to any one of claims 1-5 comprising,
a. a first outer layer comprising at least 98 wt% of a linear low density polyethylene, wherein the linear low density polyethylene is a low density polyethylene copolymer comprising ethylene and 1-butene
b. a first inner layer
c. a second inner layer
d. a third inner layer
e. a second outer layer comprising 70% to 30wt% of a linear low density polyethylene and 30 to 70wt% VLDPE,
wherein at least one of the first inner layer and/or the third inner layer comprises at least 98wt% of a propylene ethylene copolymer
and wherein the other inner layer(s) comprise(s) at least 98wt% of a linear low density polyethylene, wherein the linear low density polyethylene comprises ethylene and 1-hexene
wherein the second outer layer comprises very low density polyethylene and linear low density polyethylene, wherein the VLDPE is a low density polyethylene copolymer comprising ethylene and 1-hexene and wherein the linear low density polyethylene is a low density polyethylene copolymer comprising ethylene and 1-butene.

9. Multilayer film according to any one of claims 1-5 comprising
a. a first outer layer comprising at least 98 wt% of a linear low density polyethylene, wherein the linear low density polyethylene is a low density polyethylene copolymer comprising ethylene and 1-butene
b. a first inner layer
c. a second inner layer
d. a third inner layer
e. a second outer layer comprising 70% to 30wt% of a linear low density polyethylene and 30 to 70wt% VLDPE,
wherein at least one of the first inner layer and/or the third inner layer comprises at least 98wt% of a propylene ethylene copolymer
and wherein the other inner layer(s) comprise(s) at least 98wt% of a linear low density polyethylene, wherein the linear low density polyethylene is a low density polyethylene copolymer comprising ethylene and 1-butene
wherein the second outer layer comprises very low density polyethylene and linear low density polyethylene, wherein the VLDPE is a low density polyethylene copolymer comprising ethylene and 1-hexene and wherein the linear low density polyethylene is a low density polyethylene copolymer comprising ethylene and 1-butene

10. Multilayer film according to any one of claims 1-9,
wherein the first outer layer constitutes from 10 to 20wt% of the multi-layer film, for example around 15wt%,
wherein the second outer layer constitutes from 10 to 20wt% of the multi-layer film, for example around 15wt%,
wherein the inner layer(s) comprising the propylene ethylene copolymer constitute(s) from 5 to 35wt% of the multi-layer film, preferably from 5 to 15wt%, for example from 10 to 15wt%.
and wherein the inner layer(s) comprising a linear low density polyethylene constitute from 25 to 75wt% of the multilayer film.

11. Multilayer film according to any one of claims 1-10, wherein each layer in the multilayer film of the invention comprises an amount of additives of 0 to 2wt% based on the total weight of the layer.

12. Multilayer film according to any one of claims 1-11, wherein the propylene ethylene copolymer is a copolymer of propylene with ethylene wherein the ethylene is randomly distributed within the polymeric chain.

13. Process for the preparation of the multilayer film of any one of claims 1-12, wherein the multilayer film is prepared by a cast film extrusion process.

14. Process for wrapping an object which comprises a plurality of individual articles, preferably substantially identical articles, comprising
i) obtaining the multilayer film of any one of claims 1-12
ii) stretching and wrapping said multilayer film around said object in order to obtain a wrapped object.

15. Object comprising a plurality of individual articles, preferably substantially identical articles, wherein the object is stretch wrapped by the multilayer film of any one of claims 1-12.

## Patentansprüche

1. Streckbarer mehrschichtiger Film, umfassend in folgender Reihenfolge:
a. eine erste äußere Schicht, umfassend wenigstens 98 Gew.-% an einem linearen Polyethylen mit niedriger Dichte,
b. eine erste innere Schicht,
c. eine zweite innere Schicht,
d. eine dritte innere Schicht,
e. eine zweite äußere Schicht, umfassend 70 Gew.-% bis 30 Gew.-% an einem linearen Polyethylen mit niedriger Dichte und 30 Gew.-% bis 70 Gew.-% Polyethylen mit sehr niedriger Dichte (VLDPE),
wobei lineares Polyethylen mit niedriger Dichte eine Dichte von 915 bis 934 kg/m³, wie bestimmt gemäß ISO 1872-2, aufweist und das VLDPE eine Dichte von 900 bis 915 kg/m³, wie bestimmt gemäß ISO 1872-2, aufweist;
wobei
die erste innere Schicht und/oder die dritte innere Schicht
- wenigstens 98 Gew.-% an einem Propylen-Homopolymer oder 98 Gew.-% an einem Propylen-Ethylen-Copolymer umfasst/umfassen, wobei die andere(n) innere(n) Schicht(en) wenigstens 98 Gew.-% an einem linearen Polyethylen mit niedriger Dichte umfasst/umfassen; oder
- im Wesentlichen aus einem Propylen-Homopolymer besteht/bestehen oder im Wesentlichen aus einem Propylen-Ethylen-Copolymer besteht/bestehen, wobei die andere(n) innere(n) Schicht(en) im Wesentlichen aus einem linearen Polyethylen mit niedriger Dichte besteht/bestehen;
wobei die erste innere Schicht in direktem Kontakt mit der ersten äußeren Schicht steht und die dritte innere Schicht in direktem Kontakt mit der zweiten äußeren Schicht steht.

2. Mehrschichtiger Film gemäß Anspruch 1, wobei das verwendete Propylen-Ethylen-Copolymer ein Propylen-Ethylen-Copolymer mit einer Menge an Ethylen in dem Propylen-Copolymer in dem Bereich von 1 bis 5 Gew.-%, vorzugsweise von 3 bis 5 Gew.-%, bezogen auf das Propylen-Ethylen-Copolymer, ist.

3. Mehrschichtiger Film gemäß einem der Ansprüche 1-2, wobei die Dichte des linearen Polyethylens mit niedriger Dichte in der/den inneren Schicht(en) von 917 bis 920 kg/m³ beträgt und wobei der Schmelzflussindex des linearen Polyethylens mit niedriger Dichte in der/den inneren Schicht(en) vorzugsweise in dem Bereich von 1,8 bis 4,5 g/10 min, vorzugsweise von 2 bis 4 g/10 min, liegt.

4. Mehrschichtiger Film gemäß einem der Ansprüche 1-3, wobei die Dicke des mehrschichtigen Films in dem Bereich von 15 bis 25 Mikrometer, vorzugsweise in dem Bereich von 15 bis 17 µm, liegt.

5. Mehrschichtiger Film gemäß einem der Ansprüche 1-4, umfassend eine oder mehrere weitere Schichten, welche Schichten jeweils einzeln wenigstens 98 Gew.-% an einem Propylen-Homopolymer und/oder wenigstens 98 Gew.-% an einem Propylen-Ethylen-Copolymer und/oder wenigstens 98 Gew.-% an einem linearen Polyethylen mit niedriger Dichte umfassen.

6. Mehrschichtiger Film gemäß einem der Ansprüche 1-5, wobei die erste äußere Schicht lineares Polyethylen mit niedriger Dichte umfasst, wobei das lineare Polyethylen mit niedriger Dichte ein Polyethylen-Copolymer mit niedriger Dichte ist, das Ethylen und 1-Buten oder Ethylen und 1-Hexen oder Ethylen und 1-Octen umfasst,
wobei wenigstens eine von der ersten inneren Schicht und/oder der dritten inneren Schicht ein Propylen-Homopolymer oder ein Propylen-Ethylen-Copolymer, vorzugsweise ein Propylen-Ethylen-Copolymer, umfasst,
wobei wenigstens eine der inneren Schichten lineares Polyethylen mit niedriger Dichte umfasst, wobei das lineare Polyethylen mit niedriger Dichte unter Verwendung eines Metallocenkatalysators hergestellt ist,
wobei wenigstens eine der inneren Schichten ein lineares Polyethylen mit niedriger Dichte umfasst, wobei das lineare Polyethylen mit niedriger Dichte ein Polyethylen-Copolymer mit niedriger Dichte ist, das Ethylen und 1-Buten oder Ethylen und 1-Hexen oder Ethylen und 1-Octen umfasst,
wobei die zweite äußere Schicht Polyethylen mit sehr niedriger Dichte und lineares Polyethylen mit niedriger Dichte umfasst, wobei das VLDPE ein Polyethylen-Copolymer mit niedriger Dichte ist, das Ethylen und 1-Hexen oder Ethylen und 1-Octen, vorzugsweise Ethylen und 1-Hexen, umfasst, und wobei das lineare Polyethylen mit niedriger Dichte ein Polyethylen-Copolymer mit niedriger Dichte ist, das Ethylen und 1-Buten oder Ethylen und 1-Hexen oder Ethylen und 1-Octen umfasst.

7. Mehrschichtiger Film gemäß Anspruch 6, umfassend
a. eine erste äußere Schicht, umfassend wenigstens 98 Gew.-% an einem linearen Polyethylen mit niedriger Dichte, wobei das lineare Polyethylen mit niedriger Dichte ein Polyethylen-Copolymer mit niedriger Dichte ist, das Ethylen und 1-Buten umfasst,
b. eine erste innere Schicht,
c. eine zweite innere Schicht,
d. eine dritte innere Schicht,
e. eine zweite äußere Schicht, umfassend 70 Gew.-% bis 30 Gew.-% an einem linearen Polyethylen mit niedriger Dichte und 30 Gew.-% bis 70 Gew.-% VLDPE,
wobei wenigstens eine von der ersten inneren Schicht und/oder der dritten inneren Schicht wenigstens 98 Gew.-% an einem Propylen-Ethylen-Copolymer umfasst,
und wobei die andere(n) innere(n) Schicht(en) wenigstens 98 Gew.-% an einem linearen Polyethylen mit niedriger Dichte umfasst/umfassen, wobei wenigstens eine der inneren Schichten ein lineares Polyethylen mit niedriger Dichte umfasst, wobei das lineare Polyethylen mit niedriger Dichte unter Verwendung eines Metallocenkatalysators hergestellt ist und wobei gegebenenfalls wenigstens eine der inneren Schichten wenigstens 98 Gew.-% an einem linearen Polyethylen mit niedriger Dichte umfasst, wobei das lineare Polyethylen mit niedriger Dichte ein Polyethylen-Copolymer mit niedriger Dichte ist, das Ethylen und 1-Buten umfasst,
wobei die zweite äußere Schicht ein Polyethylen mit sehr niedriger Dichte und lineares Polyethylen mit niedriger Dichte umfasst, wobei das VLDPE ein Polyethylen-Copolymer mit niedriger Dichte ist, das Ethylen und 1-Hexen umfasst, und wobei das lineare Polyethylen mit niedriger Dichte ein Polyethylen-Copolymer mit niedriger Dichte ist, das Ethylen und 1-Buten umfasst.

8. Mehrschichtiger Film gemäß einem der Ansprüche 1-5, umfassend
a. eine erste äußere Schicht, umfassend wenigstens 98 Gew.-% an einem linearen Polyethylen mit niedriger Dichte, wobei das lineare Polyethylen mit niedriger Dichte ein Polyethylen-Copolymer mit niedriger Dichte ist, das Ethylen und 1-Buten umfasst,
b. eine erste innere Schicht,
c. eine zweite innere Schicht,
d. eine dritte innere Schicht,
e. eine zweite äußere Schicht, umfassend 70 Gew.-% bis 30 Gew.-% an einem linearen Polyethylen mit niedriger Dichte und 30 Gew.-% bis 70 Gew.-% VLDPE,
wobei wenigstens eine von der ersten inneren Schicht und/oder der dritten inneren Schicht wenigstens 98 Gew.-% an einem Propylen-Ethylen-Copolymer umfasst,
und wobei die andere(n) innere(n) Schicht(en) wenigstens 98 Gew.-% an einem linearen Polyethylen mit niedriger Dichte umfasst/umfassen, wobei das lineare Polyethylen mit niedriger Dichte Ethylen und 1-Hexen umfasst,
wobei die zweite äußere Schicht Polyethylen mit sehr niedriger Dichte und lineares Polyethylen mit niedriger Dichte umfasst, wobei das VLDPE ein Polyethylen-Copolymer mit niedriger Dichte ist, das Ethylen und 1-Hexen umfasst, und wobei das lineare Polyethylen mit niedriger Dichte ein Polyethylen-Copolymer mit niedriger Dichte ist, das Ethylen und 1-Buten umfasst.

9. Mehrschichtiger Film gemäß einem der Ansprüche 1-5, umfassend
a. eine erste äußere Schicht, umfassend wenigstens 98 Gew.-% an einem linearen Polyethylen mit niedriger Dichte, wobei das lineare Polyethylen mit niedriger Dichte ein Polyethylen-Copolymer mit niedriger Dichte ist, das Ethylen und 1-Buten umfasst,
b. eine erste innere Schicht,
c. eine zweite innere Schicht,
d. eine dritte innere Schicht,
e. eine zweite äußere Schicht, umfassend 70 Gew.-% bis 30 Gew.-% an einem linearen Polyethylen mit niedriger Dichte und 30 Gew.-% bis 70 Gew.-% VLDPE,
wobei wenigstens eine von der ersten inneren Schicht und/oder der dritten inneren Schicht wenigstens 98 Gew.-% an einem Propylen-Ethylen-Copolymer umfasst,
und wobei die andere(n) innere(n) Schicht(en) wenigstens 98 Gew.-% an einem linearen Polyethylen mit niedriger Dichte umfasst/umfassen, wobei das lineare Polyethylen mit niedriger Dichte ein Polyethylen mit niedriger Dichte ist, das Ethylen und 1-Buten umfasst,
wobei die zweite äußere Schicht Polyethylen mit sehr niedriger Dichte und lineares Polyethylen mit niedriger Dichte umfasst, wobei das VLDPE ein Polyethylen-Copolymer mit niedriger Dichte ist, das Ethylen und 1-Hexen umfasst, und wobei das lineare Polyethylen mit niedriger Dichte ein Polyethylen-Copolymer mit niedriger Dichte ist, das Ethylen und 1-Buten umfasst.

10. Mehrschichtiger Film gemäß einem der Ansprüche 1-9, wobei die erste äußere Schicht von 10 bis 20 Gew.-% des mehrschichtigen Films, beispielsweise etwa 15 Gew.-%, bildet,
wobei die zweite äußere Schicht von 10 bis 20 Gew.-% des mehrschichtigen Films, beispielsweise etwa 15 Gew.-%, bildet,
wobei die inneren Schicht (en), die das Propylen-Ethylen-Copolymer umfasst/umfassen, von 5 bis 35 Gew.-% des mehrschichtigen Films, vorzugsweise von 5 bis 15 Gew.-%, beispielsweise von 10 bis 15 Gew.-%, bildet/bilden,
und wobei die inneren Schicht(en), die ein lineares Polyethylen mit niedriger Dichte umfasst/umfassen, von 25 bis 75 Gew.-% des mehrschichtigen Films bildet/bilden.

11. Mehrschichtiger Film gemäß einem der Ansprüche 1-10, wobei jede Schicht in dem mehrschichtigen Film gemäß der Erfindung eine Menge an Zusatzstoffen von 0 bis 2 Gew.-%, bezogen auf das Gesamtgewicht der Schicht, umfasst.

12. Mehrschichtiger Film gemäß einem der Ansprüche 1-11, wobei das Propylen-Ethylen-Copolymer ein Copolymer von Propylen mit Ethylen ist, bei dem das Ethylen statistisch in der Polymerkette verteilt ist.

13. Verfahren zur Herstellung des mehrschichtigen Films gemäß einem der Ansprüche 1-12, wobei der mehrschichtige Film durch ein Gießfilm-Extrusionsverfahren hergestellt wird.

14. Verfahren zum Einwickeln eines Gegenstands, der eine Vielzahl einzelner Stücke, vorzugsweise im Wesentlichen identische Stücke, umfasst, umfassend
i) Erhalten des mehrschichtigen Films gemäß einem der Ansprüche 1-12,
ii) Strecken und Wickeln des mehrschichtigen Films um den Gegenstand, um einen eingewickelten Gegenstand zu erhalten.

15. Gegenstand, umfassend eine Vielzahl einzelner Stücke, vorzugsweise im Wesentlichen identische Stücke, wobei der Gegenstand mit dem mehrschichtigen Film gemäß einem der Ansprüche 1-12 streckumwickelt ist.

## Revendications

1. Film multicouche étirable comprenant, dans l'ordre suivant
a. une première couche externe comprenant au moins 98 % en poids d'un polyéthylène basse densité linéaire
b. une première couche interne
c. une deuxième couche interne
d. une troisième couche interne
e. une deuxième couche externe comprenant 70 % à 30 % en poids d'un polyéthylène basse densité linéaire et 30 à 70 % en poids de polyéthylène très basse densité (VLDPE),
dans lequel le polyéthylène basse densité linéaire a une masse volumique de 915 à 934 kg/m³ telle que déterminée selon l'ISO 1872-2 et le VLDPE a une masse volumique de 900 à 915 kg/m³ telle que déterminée selon l'ISO 1872-2 ; dans lequel
la première couche interne et/ou la troisième couche interne
- comprend/comprennent au moins 98 % en poids d'un homopolymère de propylène ou 98 % en poids d'un copolymère propylène-éthylène, dans lequel la ou les autre(s) couche(s) interne(s) comprend/comprennent au moins 98 % en poids d'un polyéthylène basse densité linéaire ; ou
- est/sont essentiellement constituée(s) d'un homopolymère de propylène ou est/sont essentiellement constituée(s) d'un copolymère propylène-éthylène, dans lequel la ou les autre(s) couche(s) interne(s) est/sont essentiellement constituée(s) d'un polyéthylène basse densité linéaire ;
dans lequel la première couche interne est en contact direct avec la première couche externe, et la troisième couche interne est en contact direct avec la deuxième couche externe.

2. Film multicouche selon la revendication 1, dans lequel le copolymère propylène-éthylène utilisé est un copolymère propylène-éthylène ayant une quantité d'éthylène dans le copolymère de propylène dans la plage de 1 à 5 % en poids, de préférence de 3 à 5 % en poids sur la base du copolymère propylène-éthylène.

3. Film multicouche selon l'une quelconque des revendications 1 à 2, dans lequel la masse volumique du polyéthylène basse densité linéaire dans la ou les couche(s) interne(s) est de 917 à 920 kg/m³ et de préférence dans lequel l'indice de fluidité du polyéthylène basse densité linéaire dans la ou les couche(s) interne(s) est dans la plage de 1,8 à 4,5 g/10 min, de préférence de 2 à 4 g/10 min.

4. Film multicouche selon l'une quelconque des revendications 1 à 3, dans lequel l'épaisseur du film multicouche est dans la plage de 15 à 25 microns, de préférence dans la plage de 15 à 17 µm.

5. Film multicouche selon l'une quelconque des revendications 1 à 4, comprenant une ou plusieurs couches supplémentaires, lesdites couches comprenant chacune individuellement au moins 98 % en poids d'un homopolymère de propylène et/ou au moins 98 % en poids d'un copolymère propylène-éthylène et/ou au moins 98 % en poids d'un polyéthylène basse densité linéaire.

6. Film multicouche selon l'une quelconque des revendications 1 à 5,
dans lequel la première couche externe comprend un polyéthylène basse densité linéaire, dans lequel le polyéthylène basse densité linéaire est un copolymère de polyéthylène basse densité comprenant de l'éthylène et du 1-butène ou de l'éthylène et du 1-hexène ou de l'éthylène et du 1-octène
dans lequel au moins l'une parmi la première couche interne et/ou la troisième couche interne comprend un homopolymère de propylène ou un copolymère propylène-éthylène, de préférence un copolymère propylène-éthylène dans lequel au moins une des couches internes comprend un polyéthylène basse densité linéaire, dans lequel le polyéthylène basse densité linéaire est produit au moyen d'un catalyseur à métallocène
dans lequel au moins une des couches internes comprend un polyéthylène basse densité linéaire, dans lequel le polyéthylène basse densité linéaire est un copolymère de polyéthylène basse densité comprenant de l'éthylène et du 1-butène ou de l'éthylène et du 1-hexène ou de l'éthylène et du 1-octène
dans lequel la deuxième couche externe comprend un polyéthylène très basse densité et un polyéthylène basse densité linéaire, dans lequel le VLDPE est un copolymère de polyéthylène basse densité comprenant de l'éthylène et du 1-hexène ou de l'éthylène et du 1-octène, de préférence de l'éthylène et du 1-hexène et dans lequel le polyéthylène basse densité linéaire est un copolymère de polyéthylène basse densité comprenant de l'éthylène et du 1-butène ou de l'éthylène et du 1-hexène ou de l'éthylène et du 1-octène.

7. Film multicouche selon la revendication 6 comprenant
a. une première couche externe comprenant au moins 98 % en poids d'un polyéthylène basse densité linéaire,
dans lequel le polyéthylène basse densité linéaire est un copolymère de polyéthylène basse densité comprenant de l'éthylène et du 1-butène
b. une première couche interne
c. une deuxième couche interne
d. une troisième couche interne
e. une deuxième couche externe comprenant 70 % à 30 % en poids d'un polyéthylène basse densité linéaire et 30 à 70 % en poids de VLDPE,
dans lequel au moins l'une parmi la première couche interne et/ou la troisième couche interne comprend au moins 98 % en poids d'un copolymère propylène-éthylène et dans lequel la ou les autre(s) couche(s) interne(s) comprend/comprennent au moins 98 % en poids d'un polyéthylène basse densité linéaire, dans lequel au moins une des couches internes comprend un polyéthylène basse densité linéaire, dans lequel le polyéthylène basse densité linéaire est produit au moyen d'un catalyseur à métallocène et facultativement, dans lequel au moins une des couches internes comprend au moins 98 % en poids d'un polyéthylène basse densité linéaire, dans lequel le polyéthylène basse densité linéaire est un copolymère de polyéthylène basse densité comprenant de l'éthylène et du 1- butène
dans lequel la deuxième couche externe comprend un polyéthylène très basse densité et un polyéthylène basse densité linéaire, dans lequel le VLDPE est un copolymère de polyéthylène basse densité comprenant de l'éthylène et du 1-hexène et dans lequel le polyéthylène basse densité linéaire est un copolymère de polyéthylène basse densité comprenant de l'éthylène et du 1-butène.

8. Film multicouche selon l'une quelconque des revendications 1 à 5 comprenant,
a. une première couche externe comprenant au moins 98 % en poids d'un polyéthylène basse densité linéaire, dans lequel le polyéthylène basse densité linéaire est un copolymère de polyéthylène basse densité comprenant de l'éthylène et du 1-butène
b. une première couche interne
c. une deuxième couche interne
d. une troisième couche interne
e. une deuxième couche externe comprenant 70 % à 30 % en poids d'un polyéthylène basse densité linéaire et 30 à 70 % en poids de VLDPE,
dans lequel au moins l'une parmi la première couche interne et/ou la troisième couche interne comprend au moins 98 % en poids d'un copolymère propylène-éthylène et dans lequel la ou les autre(s) couche(s) interne(s) comprend/comprennent au moins 98 % en poids d'un polyéthylène basse densité linéaire, dans lequel le polyéthylène basse densité linéaire comprend de l'éthylène et du 1-hexène
dans lequel la deuxième couche externe comprend un polyéthylène très basse densité et un polyéthylène basse densité linéaire, dans lequel le VLDPE est un copolymère de polyéthylène basse densité comprenant de l'éthylène et du 1-hexène et dans lequel le polyéthylène basse densité linéaire est un copolymère de polyéthylène basse densité comprenant de l'éthylène et du 1-butène.

9. Film multicouche selon l'une quelconque des revendications 1 à 5 comprenant
a. une première couche externe comprenant au moins 98 % en poids d'un polyéthylène basse densité linéaire, dans lequel le polyéthylène basse densité linéaire est un copolymère de polyéthylène basse densité comprenant de l'éthylène et du 1-butène
b. une première couche interne
c. une deuxième couche interne
d. une troisième couche interne
e. une deuxième couche externe comprenant 70 % à 30 % en poids d'un polyéthylène basse densité linéaire et 30 à 70 % en poids de VLDPE,
dans lequel au moins l'une parmi la première couche interne et/ou la troisième couche interne comprend au moins 98 % en poids d'un copolymère propylène-éthylène et dans lequel la ou les autre(s) couche(s) interne(s) comprend/comprennent au moins 98 % en poids d'un polyéthylène basse densité linéaire, dans lequel le polyéthylène basse densité linéaire est un copolymère de polyéthylène basse densité comprenant de l'éthylène et du 1-butène
dans lequel la deuxième couche externe comprend un polyéthylène très basse densité et un polyéthylène basse densité linéaire, dans lequel le VLDPE est un copolymère de polyéthylène basse densité comprenant de l'éthylène et du 1-hexène et dans lequel le polyéthylène basse densité linéaire est un copolymère de polyéthylène basse densité comprenant de l'éthylène et du 1-butène.

10. Film multicouche selon l'une quelconque des revendications 1 à 9,
dans lequel la première couche externe constitue de 10 à 20 % en poids du film multicouche, par exemple environ 15 % en poids,
dans lequel la deuxième couche externe constitue de 10 à 20 % en poids du film multicouche, par exemple environ 15 % en poids,
dans lequel la ou les couche(s) interne(s) comprenant le copolymère propylène-éthylène constitue(nt) de 5 à 35 % en poids du film multicouche, de préférence de 5 à 15 % en poids, par exemple de 10 à 15 % en poids,
et dans lequel la ou les couche(s) interne(s) comprenant un polyéthylène basse densité linéaire constitue(nt) de 25 à 75 % en poids du film multicouche.

11. Film multicouche selon l'une quelconque des revendications 1 à 10, dans lequel chaque couche dans le film multicouche de l'invention comprend une quantité d'additifs de 0 à 2 % en poids sur la base du poids total de la couche.

12. Film multicouche selon l'une quelconque des revendications 1 à 11, dans lequel le copolymère propylène-éthylène est un copolymère de propylène avec de l'éthylène dans lequel l'éthylène est distribué de façon aléatoire dans la chaîne polymère.

13. Procédé de préparation du film multicouche selon l'une quelconque des revendications 1 à 12, dans lequel le film multicouche est préparé par un procédé d'extrusion de film coulé.

14. Procédé d'enveloppement d'un objet qui comprend une pluralité d'articles individuels, de préférence des articles sensiblement identiques, comprenant
i) l'obtention du film multicouche selon l'une quelconque des revendications 1 à 12
ii) l'étirage et l'enveloppement dudit film multicouche autour dudit objet afin d'obtenir un objet enveloppé.

15. Objet comprenant une pluralité d'articles individuels, de préférence des articles sensiblement identiques, l'objet étant enveloppé par étirage par le film multicouche selon l'une quelconque des revendications 1 à 12.
